# EUROPEAN PATENT APPLICATION

(11) **EP 4 366 070 A2**
(43) Date of publication of application: **08.05.2024**
(21) Application number: 23207261.1
(22) Date of filing: 01.11.2023
(51) Int. Cl.: H01M 50/536, H01M 50/538, H01M 50/566

(54) **SECONDARY BATTERY WITH WELDED ELECTRODE ASSEMBLY**

(30) Priority: 03.11.2022 KR 20220145044
(71) Applicant: Samsung SDI Co., Ltd., Yongin-si, Gyeonggi-do 17084 (KR)
(72) Inventor: Kim, Joong Hun, 17084 Yongin-si, Gyeonggi-do (KR); Cho, Chang Hun, 17084 Yongin-si, Gyeonggi-do (KR); Lee, Wook Su, 17084 Yongin-si, Gyeonggi-do (KR)
(74) Representative: Gulde & Partner

(57) **Abstract**

A secondary battery (10,10') includes: a case (200, 300'); an electrode assembly (100, 100') in the case (200, 300') and comprising a first electrode plate (110) on which a first base tab (112, 120') is located at a first end in a longitudinal direction of the case (200, 300'), a second electrode plate (120) on which a second base tab (140') is located at a second end in the longitudinal direction of the case (200, 300'), and a separator (130) between the first electrode plate (110) and the second electrode plate (120); and a cap assembly (300) coupled to the case (200, 300'), and comprising a pair of collectors (330, 340) electrically connected to the first base tab (112, 120') and the second base tab (140'), respectively, wherein the first base tab (112, 120') and the second base tab (140') are laser welded to the pair of collectors (330, 340), respectively.

## Description

### BACKGROUND

### 1. Field

Aspects of some embodiments relate to a secondary battery having a relatively improved welding structure of an electrode assembly.

### 2. Description of the Related Art

A secondary battery may include an electrode assembly in which a separator is located between a positive electrode plate and a negative electrode plate, and then, the separator, the positive electrode plate, and the negative electrode plate may be stacked or wound. A case may be utilized to house or accommodate the electrode assembly together with an electrolyte, and a cap assembly may be utilized to seal the case. In such an electrode assembly, non-coating portion tabs (base tabs) may protrude in a lateral or upward direction, and the non-coating portion tabs may be gathered to one side and then bent upward so that the non-coating portion tabs and a collector are welded to each other. However, it may be desirable to improve a welding process because the bent non-coating portion tabs press an electrode plate, or welding heat is transferred to damage the electrode plate. In addition, because space utilization inside the secondary battery may be deteriorated due to a bent space of the non-coating portion tabs, a method for improving the space utilization may be desired.

The above information disclosed in this Background section is only for enhancement of understanding of the background and therefore the information discussed in this Background section does not necessarily constitute prior art.

### SUMMARY

Aspects of some embodiments of the present invention provide a secondary battery having an improved welding structure of an electrode assembly.

According to some embodiments, a secondary battery includes: a rectangular case; an electrode assembly accommodated in the case and including a first electrode plate on which a first base tab is at one end in a longitudinal direction of the case, a second electrode plate on which a second base tab is at the other end in the longitudinal direction of the case, and a separator between the first electrode plate and the second electrode plate; and a cap assembly being coupled to the case, and comprising a pair of collectors electrically connected to the first base tab and the second base tab, respectively, wherein the first base tab and the second base tab are laser welded to the pair of collectors, respectively.

According to some embodiments, the first base tab and the second base tab may be bent in one direction to be in surface contact with the pair of collectors, respectively.

According to some embodiments, the first base tab and the second base tab may be welded to back beads on rear surfaces of the pair of collectors by the laser welding, respectively.

According to some embodiments, the back beads may protrude toward the first base tab and the second base tab, respectively.

According to some embodiments, a laser output range of the laser welding may be in a range of about 550 W to about 630 W.

According to some embodiments, when the pair of collectors and the first base tab and the second base tab are respectively welded, a direction in which the laser welding may be performed is parallel to a metal processing grain of each of the first base tab and the second base tab.

According to some embodiments, the direction of the metal processing grain may be formed by rolling process.

According to some embodiments, the pair of collectors may include a first collector member and a second collector member. The first collector member may include a first collector electrically connected to a first terminal part, a connection plate electrically connected to the first collector, and a sub plate electrically connected to the connection plate and the first base tab.

According to some embodiments, the second collector member may have the same configuration as the first collector member, but may be arranged to be symmetrical to the first collector member and electrically connected to the second electrode plate.

According to some embodiments, one end of the sub plate may in contact with and welded to a portion of the connection plate.

According to some embodiments, the sub plate may comprise a first connection part at which the sub plate is connected to the connection plate and a second connection part at which the sub plate is connected to the first base tab.

According to some embodiments, each of the first connection part and the second connection part may be bent at an angle.

According to some embodiments, the second connection part may be arranged so that an inner surface of the second connection part is bent from the first connection part toward the electrode assembly and located on the same plane as an inner surface of the connection plate.

According to some embodiments, the inner surface of the second connection part may be connected to the first base tab by laser welding.

According to some embodiments, a plurality of concave welding grooves may be defined or omitted on an outer surface of the second connection part.

According to some embodiments of the present invention, because the collector and the base tab are welded to each other in a state of the surface contact, a wide and even melting area may be secured to improve weldability. Therefore, even electrode plate reactivity may be secured through heat generation with a wide current path.

All embodiments described in this specification may be advantageously combined with one another to the extent that their respective features are compatible. In particular, the expressions "according to an embodiment," "in an embodiment," "an embodiment of the invention provides" etc. mean that the respective features may or may not be part of specific embodiments of the present invention.

### BRIEF DESCRIPTION OF THE DRAWINGS

The accompanying drawings are included to provide a further understanding of aspects of some embodiments of the present invention, and are incorporated in and constitute a part of this specification. The drawings illustrate aspects of some embodiments of the present invention and, together with the description, serve to explain aspects of some characteristics of some embodiments of the present invention. In the drawings:
FIG. 1 illustrates a perspective view of a secondary battery according to some embodiments;
FIG. 2 illustrates an exploded perspective view of a cap assembly of FIG. 1 according to some embodiments;
FIG. 3 illustrates a perspective view of an electrode assembly and a partial collection structure of FIG. 1 according to some embodiments;
FIG. 4 illustrates a perspective view of a secondary battery according to some embodiments ;
FIG. 5 illustrates an exploded perspective view of the secondary battery of FIG. 4 according to some embodiments;
FIG. 6 illustrates a cross-sectional view of a method for welding an electrode assembly according to some embodiments;
FIG. 7 illustrates a graph of a laser output applied to the welding method according to some embodiments;
FIG. 8 illustrates a view of an example of a shape of a back bead formed by the welding method of FIG. 6 according to some embodiments;
FIG. 9a illustrates a view of a heat generation state of the electrode assembly before the welding method according to some embodiments is applied; and
FIG. 9b illustrates a view of a heat generation state of the electrode assembly after the welding method according to some embodiments is applied.

### DETAILED DESCRIPTION

Embodiments of the present invention may, however, be embodied in many different forms and should not be construed as being limited to the embodiments set forth herein. Rather, these embodiments are provided so that this disclosure will be thorough and complete, and will fully convey the scope of the present invention to those skilled in the art.

In addition, in the following drawings, the size (e.g., thickness) of each layer is exaggerated for convenience and clarity of description, and the same reference numerals in the drawings refer to the same elements. As used herein, the term "and/or" includes any and all combinations of one or more of the associated listed items. In this specification, it will also be understood that if a member A is referred to as being connected to a member B, the member A can be directly connected to the member B or indirectly connected to the member B with a member C therebetween.

The terms used in this specification are for illustrative purposes of the present invention only and should not be construed to limit the meaning or the scope of the present invention. As used in this specification, a singular form may, unless definitely indicating a particular case in terms of the context, include a plural form. Also, the expressions "comprise/include" and/or "comprising/including" used in this specification neither define the mentioned shapes, numbers, steps, operations, members, elements, and/or groups of these, nor exclude the presence or addition of one or more other different shapes, numbers, steps, operations, members, elements, and/or groups of these.

As used herein, terms such as "first," "second," etc. are used to describe various members, components, areas, layers, and/or portions. However, it is obvious that the members, components, areas, layers, and/or portions should not be defined by these terms. The terms do not mean a particular order, up and down, or superiority, and are used only for distinguishing one member, component, area, layer, or portion from another member, component, area, layer, or portion. Thus, a first member, component, area, layer, or portion which will be described may also refer to a second member, component, area, layer, or portion, without departing from the teaching of the present invention.

Spatially relative terms, such as "below", "beneath", "lower", "above", "upper" and the like, may be used herein for ease of description to describe one element or feature's relationship to another element(s) or feature(s) referring to the figures. These spatially relative terms are intended for easy comprehension of the present invention according to various process states or usage states of the present invention, and thus, the present invention is not limited thereto. For example, if an element or feature shown in the drawings is turned inside out, the element or feature described as "beneath" or "below" may change into "above" or "upper". Thus, the term "lower" may encompass the term "upper" and "below".

Hereinafter, a secondary battery according to some embodiments of the present invention will be described in more detail with reference to the accompanying drawings.

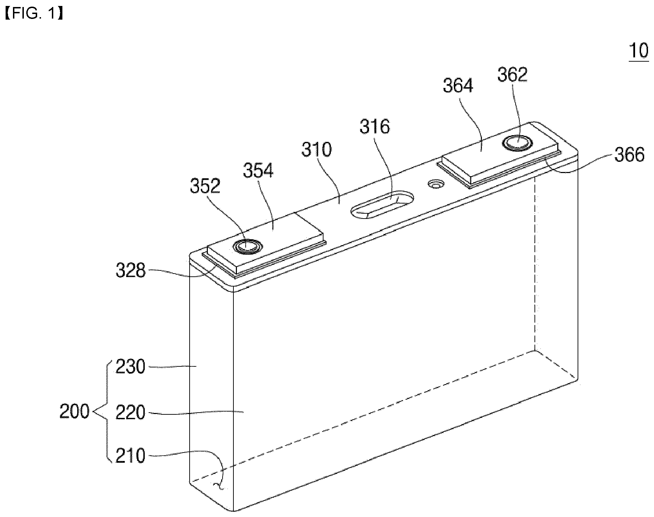

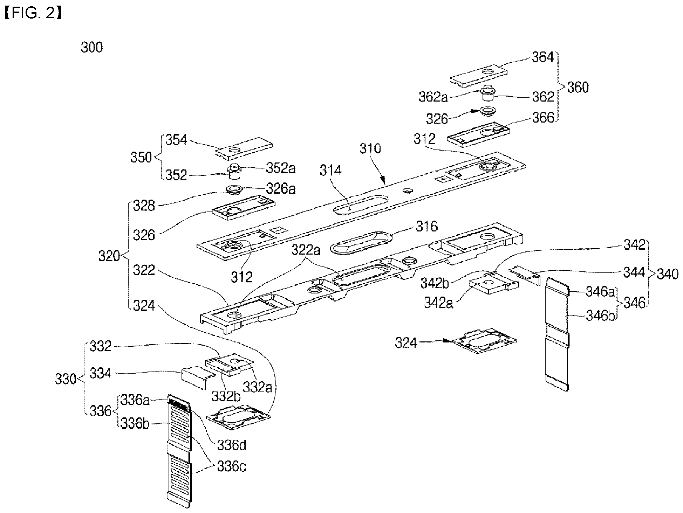

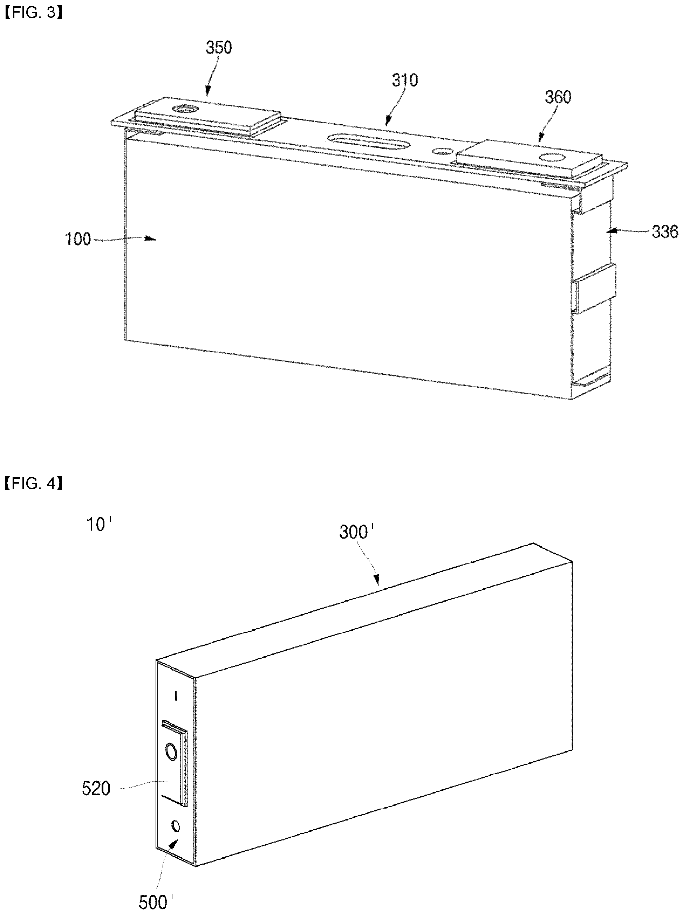

FIG. 1 illustrates a perspective view of a secondary battery according to some embodiments. FIG. 2 illustrates an exploded perspective view of a cap assembly of FIG. 1. FIG. 3 illustrates a perspective view of an electrode assembly and a partial collection structure of FIG. 1.

Referring to FIGS. 1 to 3, a secondary battery 10 of the present invention may include an electrode assembly 100, a case 200 accommodating or housing the electrode assembly 100, and a cap assembly 300 coupled to (and, for example, sealing or enclosing the electrode assembly 100 within) the case 200.

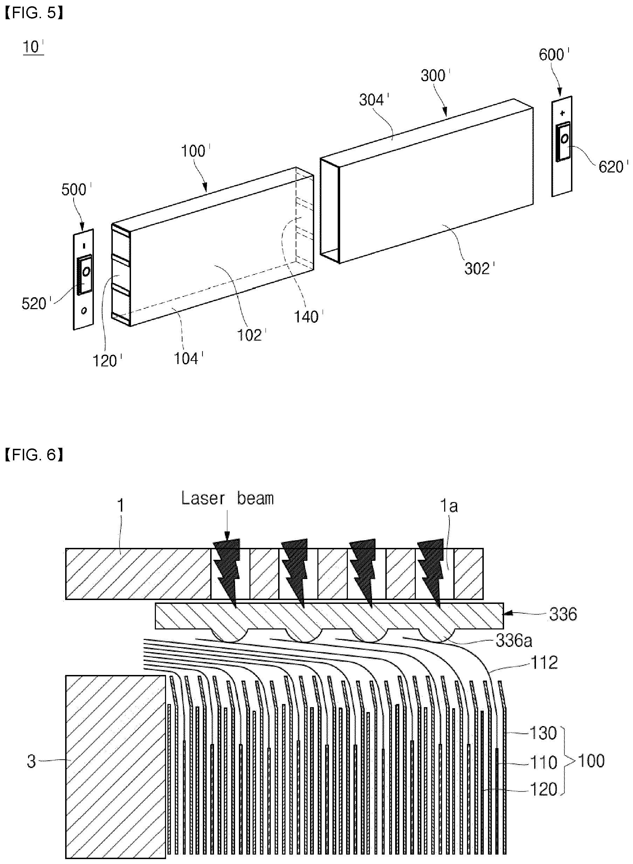

Referring to FIG. 3, the electrode assembly 100 may be provided by winding a unit stack constituted by a first electrode plate (see reference numeral 110 of FIG. 6) and a second electrode plate (see reference numeral 120 of FIG. 6), each of which has a thin plate shape or a film shape, and a separator (see reference numeral 130 of FIG. 6) located between the first and second electrode plates or by stacking a plurality of unit stacks. If the electrode assembly 100 is wound, a winding shaft may be arranged in a horizontal direction parallel (or substantially parallel) to a longitudinal direction of the cap assembly 300 or a vertical direction perpendicular (or substantially perpendicular) to the longitudinal direction of the cap assembly 300. If the electrode assembly 100 is provided by being stacked, long-side surfaces of the plurality of unit stacks may be located adjacent to each other. In some embodiments, the first electrode plate may be a negative electrode, and the second electrode plate may be a positive electrode. In some embodiments, the first electrode plate may be a positive electrode, and the second electrode plate may be a negative electrode.

If the first electrode plate is the negative electrode plate, the first electrode plate may be provided by applying a first electrode active material such as graphite or carbon to a first electrode collector made of metal foil such as copper, a copper alloy, nickel, or a nickel alloy. A first base tab (or a first non-coating portion (see reference numeral 112 of FIG. 6)) on which the first electrode active material is not applied may be located on the first electrode plate. The plurality of first base tabs may be bent to one side and welded to the collector (this will be described in more detail later). The collector may be electrically connected to the cap assembly 300.

If the second electrode plate is the positive electrode plate, the second electrode plate may be provided by applying a second electrode active material such as transition metal oxide to a second electrode collector made of metal foil such as aluminum or an aluminum alloy. A second base tab (or second non-coating portion), which is an area on which the second electrode active material is not applied, may be located on the second electrode plate. The plurality of second base tabs may be bent to one side and welded to the collector. The collector may be electrically connected to the cap assembly 300.

The separator may be located between the first electrode plate and the second electrode plate to prevent or reduce instances of a short circuit and enable movement of lithium ions. In some embodiments, the separator 130 may be made of polyethylene, polypropylene, or a composite film of polyethylene and polypropylene. However, embodiments according to the present invention are not limited to the above materials.

The electrode assembly 100 having the above-described structure may be accommodated or housed in the case 200 together with an electrolyte. In some embodiments, the electrolyte may include an organic solvent such as ethylene carbonate (EC), propylene carbonate (PC), diethyl carbonate (DEC), ethylmethyl carbonate (EMC), or dimethyl carbonate (DMC), and lithium salt such as LiPF6 or LiBF4. In some embodiments, the electrolyte may be a liquid, or gel. In some embodiments, if an inorganic-based solid electrolyte is used, the electrolyte may be omitted.

The case 200 may have a substantially rectangular parallelepiped box shape. An upper portion of the case 200 in a vertical direction may be opened, and an accommodation space may be defined in the case 200. The electrode assembly 100 and the electrolyte may be accommodated inside the case 200 through the opened upper portion of the case 200. Some components of the cap assembly 300 may be exposed to the outside of the case 200, and some components may be accommodated in the case 200. The case 200 may be constituted by a rectangular bottom surface 210 and four side surfaces connected to the bottom surface 210. In the side surfaces, a surface having a relatively large area may be defined as a long-side portion 220, and a surface having a relatively small area may be defined as a short-side portion 230. In some embodiments, the electrode assembly 100 may be arranged so that a plate surface faces the long-side portion 220. In the state in which the electrode assembly 100 is accommodated in the case 200, the cap assembly 300 may be coupled to the case 200 and electrically connected to the electrode assembly 100. In some embodiments, an insulating film for insulation with the collector may be coupled or attached to the short-side portion 230 of the case 200.

Referring to FIGS. 1 and 2, the cap assembly 300 may include a cap plate 310 coupled to the case 200, a plurality of insulating members 320, a first collector member 330, a second collector member 340, a first terminal part 350, and the second terminal part 360 (hereinafter, only components related to the welding structure according to some embodiments of the present invention will be described in more detail).

The cap plate 310 may have a substantially rectangular plate shape and may be made of the same material as the case 200. A terminal hole 312 for coupling with each of the first terminal part 350 and the second terminal part 360, a groove, a liquid injection hole, and a vent hole 314 for coupling with a vent 316 may be defined in the cap plate 310.

The insulating member 320 may include an insulating plate 322, a pair of lower insulating parts 324, a pair of pin insulating parts 326, and an upper insulating part 328. All of the insulating members may be made of an insulating material.

The first collector member 330 may serve to electrically connect the first electrode plate 110, which is a negative electrode plate, to the first terminal part 350. The first collector member 330 may include a first collector 332 electrically connected to the first terminal part 350, a connection plate 334 electrically connected to the first collector 332, and a sub plate 336 electrically connected to the connection plate 334 and the first base tab 112 (see FIG. 6).

The sub plate 336 may be made of a conductive material having a predetermined width and length and may have a substantially plate shape. One end (upper end) of the sub plate 336 may be in contact with and welded to a lower portion of the connection plate 334. In the plate surfaces of the sub plate 336, if a surface facing the electrode assembly 100 is defined as an inner surface, and a surface facing the short-side portion 230 of the case 200 is defined as an outer surface, the first base tab 112 may be connected to the inner surface. A portion at which the sub plate 336 is connected to the connection plate 334 may be defined as a first connection part 336a, and a portion connected to the first base tab 112 may be defined as a second connection part 336b.

In the sub plate 336, each of the first connection part 336a and the second connection part 336b may be bent at an angle (e.g., a set or predetermined angle). In some embodiments, the second connection part 336b may be arranged so that the inner surface thereof is bent from the first connection part 336a toward the electrode assembly 100 and located on the same plane as the inner surface of the connection plate 334. In some embodiments, the inner surface of the second connection part 336b may be arranged to enter toward the electrode assembly 100 more than the inner surface of the connection plate 334. The inner surface of the second connection part 336b may be connected to the first base tab 112 by laser welding (this will be described in more detail later). In some embodiments, a plurality of concave welding grooves 336c may be defined on the outer surface of the second connection part 336b or omitted.

As described above, because the relatively thick first collector 332 is provided along a plane, and a thickness of each of the connection plate 334 and the sub plate 336 is thin, a space in which the electrode assembly 100 increase in size may be secured.

The second collector member 340 may have the same configuration as the first collector member 330, but is arranged to be symmetrical to the first collector member 330 and electrically connected to the second electrode plate 120. Some extraneous or repetitive details of the second collector member 340 may be omitted for convenience of description.

The first terminal part 350 may include a first terminal pin 352 and a first terminal plate 354. The first terminal part 350 may further include a fixing plate for fixing the first terminal pin 352 as needed or desired. The first terminal pin 352 may have a substantially cylindrical shape and be electrically connected to the first electrode plate 110 of the electrode assembly 100 by being electrically connected to the first collector 332.

The second terminal part 360 may include a second terminal pin 362, a second terminal plate 364, a conductive plate 366, and a fixing plate. The second terminal pin 362, the second terminal plate 364, and the fixing plate may have the same configuration as those of the first terminal part 350 and be arranged to be symmetrical to those of the first terminal part 350. The conductive plate 366 may electrically connect the second terminal plate 364 electrically connected to the second terminal pin 362 to the cap plate 310. In some embodiments, the cap plate 310 may be electrically connected to the second electrode plate 120 because of being connected to the second collector member 340 through the second terminal part 360. In some embodiments, the cap plate 310 may have the same positive polarity as the second collector member 340, and the case 200 welded to the cap plate 310 may also have a positive polarity.

In the above-described embodiments, the collector member may be a collectively called term for the collector, the connection plate, and the sub plate, but the sub plate substantially welded to the base tab may be also defined as the collector for convenience.

In some embodiments, the secondary battery according to the present invention may have a different form (some repetitive detailed description of the same configuration as in the above-described embodiments may be omitted).

FIG. 4 illustrates a perspective view of a secondary battery according to other embodiments. FIG. 5 illustrates an exploded perspective view of the secondary battery of FIG. 4.

Referring to FIGS. 4 and 5, a secondary battery 10' according to other embodiments of the present invention may include an electrode assembly 100', a rectangular case 300', and a pair of cap assemblies 500' and 600'.

The case 300' may have a rectangular parallelepiped shape and may have a shape of which both ends in a longitudinal direction are opened. The electrode assembly 100' may be provided to be wound or stacked in a rectangular parallelepiped shape corresponding to the shape of the case 300'. The electrode assembly 100' may be provided with a first base tab 120' electrically connected to a negative electrode plate and a second base tab 140' electrically connected to a positive electrode plate at both ends in the longitudinal direction of the case 300' corresponding to short-side portions. According to some embodiments, the first base tab 120' and the second base tab 140' may be electrically connected to a first terminal part 520' and a second terminal part 620' by collectors, respectively. In some embodiments, the collector may be provided as a thin metal plate and be electrically connected to each of the first terminal part 520' and the second terminal part 620'. Each of the collectors may be made of the same material as each of the first terminal part 520' and the second terminal part 620'.

Hereinafter, in the cap assembly including the collecting structure, a method of welding an electrode assembly to a collector will be described in detail (for convenience, FIG. 6 illustrates a welding method based on a first base tab of a first electrode plate, but the same welding method may also be applied to a second base tab of a second electrode plate and the secondary battery according to the embodiments of FIG. 5).

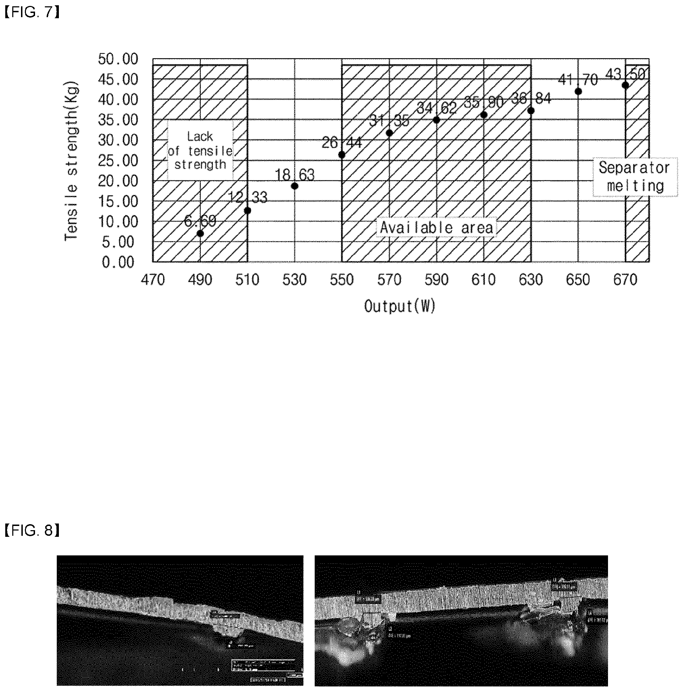

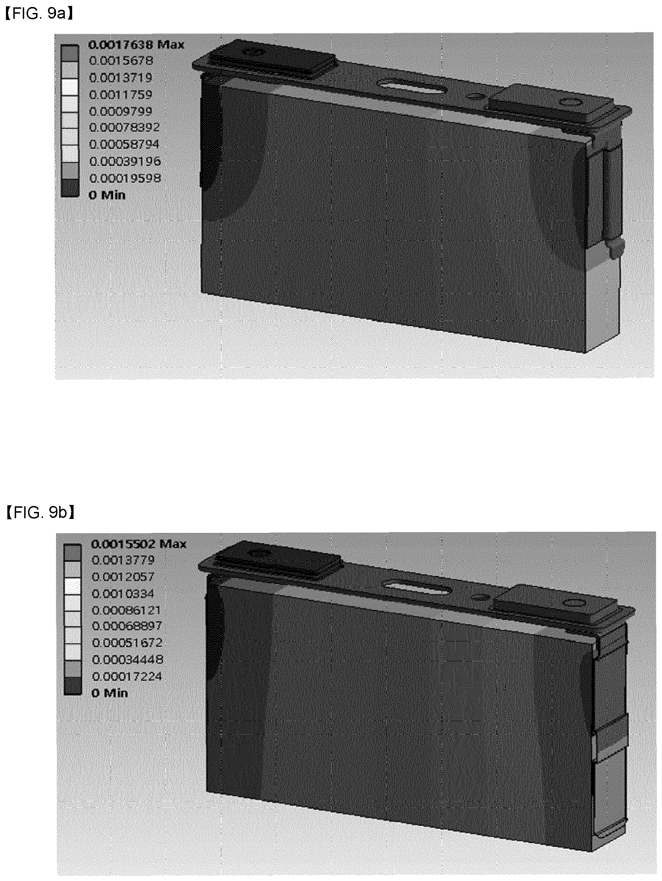

FIG. 6 illustrates a cross-sectional view of a method for welding an electrode assembly according to some embodiments. FIG. 7 illustrates a graph of a laser output applied to the welding method according to some embodiments. FIG. 8 illustrates a view of an example of a shape of a back bead formed by the welding method of FIG. 6 according to some embodiments. FIG. 9a illustrates a view of a heat generation state of the electrode assembly before the welding method according to some embodiments is applied. FIG. 9b illustrates a view of a heat generation state of the electrode assembly after the welding method according to some embodiments is applied.

Referring to FIG. 6, welding between an electrode assembly 100 and a sub plate 336 serving as a collector may be performed by laser welding. According to some embodiments, a first base tab 112 of the first electrode plate 110 may not be bent and placed on a sub plate 336, but be pushed in one direction and bent in a streamlined shape, and then the sub plate 336 may be bent and placed on the first base tab 112. In some embodiments, a pressing jig 1 for laser welding may be located on an upper portion of the sub plate 336, and a fixing jig 3 for supporting the electrode assembly 100 may be located at a side in a direction in which the first base tab 112 is bent.

A plurality of welding holes 1a through which laser beam passes may be formed in the pressing jig 1. The sub plate 336 may be maintained in the state, in which the sub plate 336 is placed on the bent first base tab 112, by the pressing jig 1. Because the first base tab 112 is in contact with the sub plate 336 in the bent state, the first base tab 112 and the sub plate 336 may be in surface contact with each other. In this state, if the laser beam is emitted through the welding holes 1a, the first base tab 112 may be welded while a rear surface of the sub plate 336 is partially melted to form a back bead 336a.

In some embodiments, the surface of the sub plate 336 may be melted to perform welding at a contact portion between the back bead 336a and the first base tab 112. The back bead 336a may protrude toward the first base tab 112. The number and intervals of back beads 336a may be adjusted by adjusting the number and intervals of welding holes 1a formed in the pressing jig 1. Because the back bead 336a and the first base tab 112 are welded to each other in this manner, the separator 130 may be located below the protruding back bead 336a to minimize transfer of welding heat. Therefore, damage to the separator 130 due to the welding heat may be prevented or reduced, which may further prevent or reduce instances of an internal short circuit occurring.

Referring to FIG. 7, as results of testing tensile strength according to an output of a laser, it may be difficult to secure sufficient welding tensile strength if the output is about 510 W or less, and the separator may be melted if the output is about 670 W or more. An appropriate output of the laser at which the separator is not melted while ensuring proper welding tensile strength may be about 510 W to about 670 W, preferably be about 550 W to about 630 W.

A commonly used IR welding source may enable securing a deep welding depth in a key hole manner, but according to some embodiments, it may enable securing a wide and even melting area. In some embodiments, as results of testing various welding sources and output conditions, a CW green welding source may be applied to secure the uniformly wide and even melting area, thereby forming the back bead. The laser using the CW Green welding source may be emitted in an appropriate output range to form the back bead 336a having the shape referring to FIG. 6 during the welding.

In the case of a structure in which the base tab is bent and welded onto the collector, referring to FIG. 9a, it may be seen that current is concentrated near the base tab and is nonuniform in terms of heating resistance and deterioration. In some embodiments, according to the current collecting structure of the present invention, referring to FIG. 9b, the entire side surface of the electrode assembly (first base tab and second base tab) may be connected to the collector. Therefore, if compared to the structure according to the related art, it may be seen that, because a current path is wider, heat is dispersed, and thus, relatively even electrode plate reactivity is realized.

In some embodiments, because the method for welding the electrode assembly is changed from general ultrasonic welding to the laser welding, space utilization inside the secondary battery may be relatively improved, and welding strength may also be relatively improved. In some embodiments, because the process of bending and welding the base tab is eliminated, a dV defect rate due to an inflow of foreign substances may be greatly reduced.

According to some embodiments of the present invention, because the collector and the base tab are welded to each other in a state of the surface contact, the wide and even melting area may be secured to improve the weldability. Therefore, the even electrode plate reactivity may be secured through the heat generation with the wide current path.

The above-mentioned embodiments are merely examples, and thus, embodiments according to the present invention are not limited to the foregoing embodiments, and also it will be understood by those of ordinary skill in the art that various changes in form and details may be made therein without departing from the scope of embodiments according to the present invention as defined by the following claims, and their equivalents.

It is clear for those of ordinary skill in the art that the disclosed embodiments can be combined where possible.

## Claims

1. A secondary battery (10, 10') comprising:
a case (200, 300');
an electrode assembly (100, 100') in the case (200, 300') and comprising a first electrode plate (110) on which a first base tab (112, 120') is located at a first end in a longitudinal direction of the case (200, 300'), a second electrode plate (120) on which a second base tab (140') is located at a second end in the longitudinal direction of the case (200, 300'), and a separator (130) between the first electrode plate (110) and the second electrode plate (120); and
a cap assembly (300) coupled to the case (200, 300'), and comprising a pair of collectors (330, 340) electrically connected to the first base tab (112, 120') and the second base tab (140'), respectively,
wherein the first base tab (112, 120') and the second base tab (140') are laser welded to the pair of collectors (330, 340), respectively.

2. The secondary battery (10, 10') as claimed in claim 1, wherein the first base tab (112, 120') and the second base tab (140') are bent in one direction to be in surface contact with the pair of collectors (330, 340), respectively.

3. The secondary battery (10, 10') as claimed in claim 1 or 2, wherein the first base tab (112, 120') and the second base tab (140') are welded to back beads (336a) on rear surfaces of the pair of collectors (330, 340) by the laser welding, respectively.

4. The secondary battery (10, 10') as claimed in claim 3, wherein the back beads (336a) protrude toward the first base tab (112, 120') and the second base tab (140'), respectively.

5. The secondary battery (10, 10') as claimed in any one of the preceding claims, wherein a laser output range of the laser welding is in a range of 550 W to 630 W.

6. The secondary battery (10, 10') as claimed in any one of the preceding claims, wherein, when the pair of collectors (330, 340) and the first base tab (112, 120') and the second base tab (140') are respectively welded, a direction in which the laser welding is performed is parallel to a metal processing grain of each of the first base tab (112, 120') and the second base tab (140').

7. The secondary battery (10, 10') as claimed in claim 6, wherein the direction of the metal processing grain is formed by a rolling process.

8. The secondary battery (10, 10') as claimed in any one of the preceding claims, wherein the pair of collectors (330, 340) include a first collector member (330) and a second collector member (340), wherein the first collector member (330) includes a first collector (332) electrically connected to a first terminal part (350), a connection plate (334) electrically connected to the first collector (332), and a sub plate (336) electrically connected to the connection plate (334) and the first base tab (112, 120').

9. The secondary battery (10, 10') as claimed in claim 8, wherein the second collector member (340) has the same configuration as the first collector member (330), but is arranged to be symmetrical to the first collector member (330) and electrically connected to the second electrode plate (120).

10. The secondary battery (10, 10') as claimed in claim 8 or 9, wherein one end of the sub plate (336) is in contact with and welded to a portion of the connection plate (334).

11. The secondary battery (10, 10') as claimed in any one of claims 8 to 10, wherein the sub plate (336) comprises a first connection part (336a) at which the sub plate (336) is connected to the connection plate (334) and a second connection part (336b) at which the sub plate (336) is connected to the first base tab (112, 120').

12. The secondary battery (10, 10') as claimed in claim 11, wherein each of the first connection part (336a) and the second connection part (336b) is bent at an angle.

13. The secondary battery (10, 10') as claimed in claim 11 or 12, wherein the second connection part (336b) is arranged so that an inner surface of the second connection part (336b) is bent from the first connection part (336a) toward the electrode assembly (100) and located on the same plane as an inner surface of the connection plate (334).

14. The secondary battery (10, 10') as claimed in claim 13, wherein the inner surface of the second connection part (336b) is connected to the first base tab (112) by laser welding.

15. The secondary battery (10, 10') as claimed in claim 13 or 14, wherein a plurality of concave welding grooves (336c) is defined or omitted on an outer surface of the second connection part (336b).
